# EUROPÄISCHE PATENTSCHRIFT

(11) **EP 1 032 518 B1**
(45) Veröffentlichungstag und Bekanntmachung des Hinweises auf die Patenterteilung: **28.05.2003**
(21) Anmeldenummer: 98965683.0
(22) Anmeldetag: 20.11.1998
(51) Int. Cl.: B60T 8/00, B60T 7/04, B60T 13/74, B60R 16/02, G05B 9/03, B60T 13/66

(54) **ELEKTROMECHANISCHES BREMSSYSTEM**
ELECTROMECHANICAL BRAKE SYSTEM
SYSTEME DE FREINAGE ELECTROMECANIQUE

(30) Priorität: 22.11.1997 DE 19751916; 22.11.1997 DE 19751917; 17.07.1998 DE 19832167
(43) Veröffentlichungstag der Anmeldung: 06.09.2000
(73) Patentinhaber: Continental Teves AG & Co. oHG, 60488 Frankfurt am Main (DE)
(72) Erfinder: BÖHM, Jürgen, D-65558 Oberneisen (DE); STÖLZL, Stefan, D-69469 Weinheim (DE); WILLIMOWSKI, Peter, D-63486 Bruchköbel (DE); NELL, Joachim, D-63452 Hanau (DE); OEHLER, Rainer, D-64295 Darmstadt (DE)
(86) Internationale Anmeldenummer: EP9807471
(87) Internationale Veröffentlichungsnummer: WO99026822

(56) Entgegenhaltungen:
- WO-A-95/13946
- DE-A- 3 504 096
- DE-A- 4 029 334
- DE-A- 19 513 004

## Beschreibung

Die Erfindung betrifft ein elektromechanisches Bremssystem und ein Verfahren zur Steuerung eines elektromechanischen Bremssystems, die durch den Einsatz eines redundanten Bussystems und durch redundante bzw. fehlererkennende Module die Systemsicherheit bei einer gleichzeitigen kostengünstigen Realisierung erhöhen.

In der derzeitigen Bremsentechnik gehen neuere Entwicklungen dahin, daß elektrische Bremssysteme untersucht werden. Die Hydraulikzylinder, die heute die Bremsbeläge gegen die Bremsscheibe pressen, werden an jeder Scheibe durch einen leistungsfähigen Elektromotor ersetzt. Die elektrische Bremse benötigt keine mechanischen oder hydraulischen Teile, wie Vakuumbremskraftverstärker oder Tandemhauptzylinder. Weiterhin kann die elektrische Bremse heutige und auch zukünftige Funktionen einer Bremse übernehmen, wie Antiblockiersystem (ABS), Traktionskontrolle oder Antriebsschlupfregelung (ASR), Electronic Stability Program (ESP) sowie den automatischen Bremseneingriff, wie er beispielsweise bei Abstandsregelsystemen vorgesehen sein kann.

Ein Beispiel für ein derartiges System ist in der WO 95/13946 gezeigt. Dieses sogenannte elektronische Bremssystem weist ein Zentralmodul und den Bremskreisen oder Radgruppen zugeordnete Bremsmodule auf. Das Zentralmodul kann hierbei ABS-, ASR-Berechnungen durchführen, kann die Bremskraftverteilung einstellen und radspezifische Bremsdrucksollwerte ermitteln.

Außerdem ist aus der DE-A-29 334 eine Pedaleinheit für Kraftfahrzeuge bekannt, bei der den Fahrerwunsch bzw. die Pedalstellung repräsentierende Signale redundant erfaßt und auf Fehler überprüft werden.

Eine Aufgabe der Erfindung ist es, ein elektromechanisches Bremssystem und ein Verfahren zum Steuern eines elektromechanischen Bremssystems, insbesondere für Kraftfahrzeuge, zu realisieren, die sicher und dabei kostengünstig aufgebaut sind sowie einen geringen Installationsaufwand benötigen.

Die Aufgabe wird gemäß den Merkmalen der unabhängigen Patentansprüche gelöst. Die abhängigen Patentansprüche zeigen vorteilhafte Ausführungsformen und Weiterentwicklungen der Erfindung auf.

Erfindungsgemäß kann ein elektromechanisches Bremssystem, insbesondere für Kraftfahrzeuge, vorgesehen sein, welches ein Pedalmodul zum redundanten Erfassen einer Fahrerbetätigung eines Bremspedals mittels einer geeigneten Sensorik aufweisen kann. Das Bremssystem kann weiterhin eine Einrichtung zum Ermitteln eines Bremssollwerts basierend auf dem Fahrerwunsch aufweisen und es kann ein Bremsmodul zum Ansteuern von zumindest einer Radbremse, basierend auf dem Bremssollwert, vorgesehen sein. Weiterhin kann eine Datenübertragungseinheit vorgesehen sein, die redundant ausgeführt ist und eine Datenverbindung zwischen dem Pedalmodul, der Einrichtung und dem Bremsmodul herstellt, wobei die Einrichtung eine Fehlererkennungsschaltung aufweisen kann, die einen Fehler bei der Ermittlung des Bremssollwerts erkennen kann.

Das Bremsmodul kann als Kreismodul ausgebildet sein, wobei jeweils eine Leistungselektronik zur Ansteuerung von zwei Aktoren in dem Kreismodul enthalten sein kann. In jedem Kreismodul kann aktorspezifische Funktionssoftware (z.B. eine Spannkraftregelung) für zwei Aktoren implementiert sein.

Die Module können über einen doppelten Datenbus bzw. die Datenübertragungseinheit verbunden sein. Die Architektur des Bremssystems ist im wesentlichen durch die Signal- und Re-dundanzschnittstellen der Module gekennzeichnet, die z.B. fehlertolerant, fail-silent oder fail-safe ausgebildet sind. Die Architektur legt damit besonderen Wert auf die Funktionsaufteilung der Fehlererkennung durch die Module selbst.

Zur Kosteneinsparung kann weiterhin eine Zentralmodulfunktion in einem Kreismodul bzw. einem Bremsmodul realisiert werden.

Erfindungsgemäß kann somit ein modularer Aufbau erzielt werden, wobei Fehler auf der Komponentenebene isoliert werden, so daß keine Fehlerfortpflanzung erfolgen kann. Weiterhin kann durch das Vorsehen des Datenbusses, welcher die einzelnen Module direkt verbindet, die Wegstrecke der Übertragung von Analogsignalen minimiert werden, so daß der Aufwand für eine EMV-Störfestigkeit relativ gering gehalten werden kann.

Ein weiterer Vorteil der Erfindung liegt darin, daß ein sicherheitskritisches Zuspannen einer Bremse - mit und ohne Vorliegen eines Bremswunsches - infolge eines Fehlers in einem Rechner, einer Leistungselektronik oder einem Aktor mit Sensoren nicht möglich ist.

Im folgenden werden Ausführungsbeispiele der Erfindung anhand von schematischen Zeichnungen näher erläutert. Es zeigen:
- Fig. 1: ein schematisches Blockschaltbild gemäß einer ersten Ausführungsform;
- Fig. 2: ein schematisches Blockschaltbild gemäß einer zweiten Ausführungsform;
- Fig. 3: ein schematisches Blockschaltbild gemäß einer dritten Ausführungsform;
- Fig. 4: ein schematische Blockschaltbild gemäß einer vierten Ausführungsform der Erfindung und
- Fig. 5: ein schematisches Blockschaltbild gemäß einer fünften Ausführungsform der Erfindung.

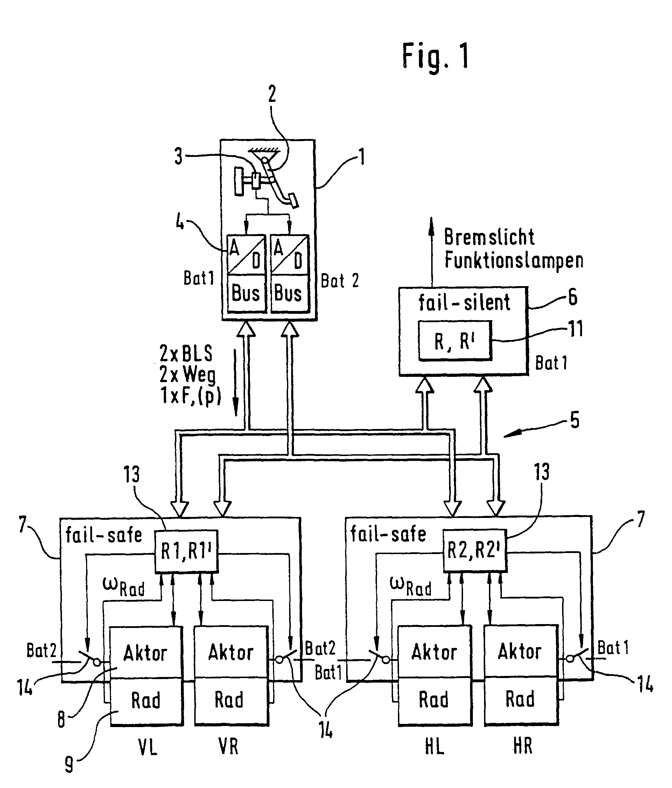

Die Fig. 1 zeigt ein Pedalmodul 1 mit einem schematisch angedeuteten Bremspedal 2. Das Bremspedal 2 bzw. die Bewegung des Bremspedals 2 kann beispielsweise über eine Sensorik 3, die drei Sensoren aufweist, erfaßt werden. Es können zwei Wegsensoren und ein Kraftsensor verwendet werden. Die Ausgangssignale dieser Sensorik 3 werden dann Modulen zur Umwandlung von Signalen der Sensorik 3 in Digitalsignale zugeführt. Diese Module können bspw. zwei integrierte Analog-/Digital-Wandler 4 sein. Die Analog-/Digital-Wandler 4 sind mit einem Datenbus 5 gekoppelt.

Es ist auch denkbar, für jeden Sensor einen eigenen Analog-/Digital-Wandler 4 vorzusehen und die gewandelten Werte auf zwei Busankopplungen zu geben (nicht dargestellt). Die erste Struktur (wie dargestellt) hat Vorteile in der einfacheren Aufteilung der Spannungsversorgung, wobei die zweite Struktur Vorteile in der einfacheren Fehlererkennung bezüglich Sensor- und Wandlerfehlern besitzt.

Im folgenden soll nun beispielhaft eine Funktionsbeschreibung der Systemarchitektur gemäß der Fig. 1 gegeben werden.

Der Fahrerbremswunsch kann im Pedalmodul 1 über die entsprechende Sensorik 3 erfaßt werden. Die Sensorik 3 ist redundant und dissimilar aufgebaut. Hierbei wird beispielsweise der Pedalweg und die Fußkraft erfaßt. Die analogen Signale der Sensorik 3 werden lokal in digitale Werte gewandelt und ohne weitere Aufbereitung auf den redundanten Datenbus 5 übertragen. Die übertragenen Daten können jedoch fehlerbehaftet sein.

Die Datenkonsolidierung, d.h. die Erkennung defekter Sensoren oder defekter Hardware und eine Bestimmung eines Bremssollwerts basierend auf den Ausgangssignalen der Sensorik 3 können nun beispielsweise in dieser Ausführungsform in einem Zentralmodul 6 erfolgen. Der in dem Zentralmodul 6 ermittelte Bremssollwert kann dann an Bremsmodule 7 über den Datenbus 5 übermittelt werden. Der Bremssollwert bzw. der Bremswunsch wird dann in den Bremsmodulen 7 in einen Sollwert einer Zuspannkraft, eines Bremsmoments und/oder in eine äquivalente Größe übertragen.

Das Zentralmodul 6 kann dem Bremssollwert höhere Funktionen, wie beispielsweise ABS, ASR, usw., überlagern und damit den Bremssollwert ändern, sofern erforderlich. Weiterhin kann das Zentralmodul 6 fail-silent ausgebildet sein. In einem Fehlerfall geht das Zentralmodul in einen sicheren Zustand über, so daß es andere Komponenten oder das Gesamtsystem nicht beeinträchtigt. In dieser Ausführungsform schaltet sich das Zentralmodul bei einem erfaßten Fehler ab.

Ist dies der Fall, so wird eine Notlauffunktion aktiviert, in der die Generierung des Bremssollwerts in jedem Bremsmodul 7 ausgeführt wird. Notwendig dafür ist lediglich die Auswertung eines Sensorsignals der Sensorik 3. Aus physikalischen Gründen (Auflösung, Rauschen, etc.) ist es jedoch sinnvoll, mehr als einen Sensor auszuwerten. Eine Überwachung der redundanten Sensoren erfolgt jedoch in der Notlauffunktion in den Bremsmodulen 7 nicht.

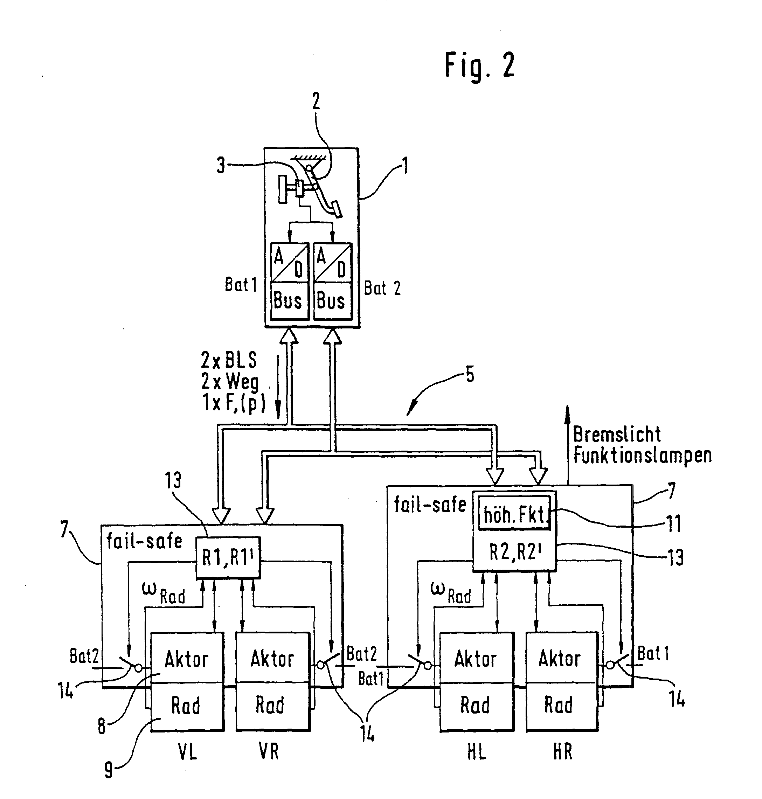

Falls in einem Bremsmodul 7 höhere Funktionen implementiert sind (siehe Fig. 2), wird in diesem Bremsmodul 7 der Bremssollwert aus den Sensorsignalen ermittelt und über den Datenbus 5 an das andere Bremsmodul 7 übertragen. Fällt ein Bremsmodul 7 aus, so übernimmt das intakte Bremsmodul 7 die Berechnung des Bremssollwertes. Das Bremsmodul 7 ohne die implementierte höhere Funktion führt jedoch keine Datenkonsolidierung und Fehlererkennung durch.

Die Fig. 2 enthält somit eine kostengünstige Variante des Bremssystems, bei der die Zentralmodulfunktion in einem Bremsmodul 7 vorgesehen ist.

In den Figuren 1 und 2 sind vier Aktoren 8 dargestellt, welche eine Bremskraft auf jeweils ein Rad 9 ausüben können. Die Aktoren 8 sind beispielsweise Elektromotoren, die Bremsbeläge gegen eine Bremsscheibe des Rads 9 drücken.

Weiterhin ist in den Figuren 1 und 2 dargestellt, daß zwei Stromversorgungen Bat 1, Bat 2 vorgesehen sind, wobei jeweils eine Stromversorgung für ein Bremsmodul 7 vorgesehen ist. Somit ist sichergestellt, daß bei Ausfall einer Stromversorgung noch ein Bremsmodul 7 sicher mit Strom versorgt werden kann. Dasselbe gilt für die Analog-/Digital-Wandler 4.

Die Bremsmodule 7 sind fail-safe ausgebildet. Die Leistungselektronik, die Aktoren, die Sensoren des Aktors und der Rechner des Bremsmoduls 7 werden beispielsweise über Rechenmodelle mit der Realität abgeglichen. Anstatt der Rechenmodelle (z.B. Differentialgleichung) könnte natürlich auch eine vorab gespeicherte Tabelle vorgesehen sein, mit der die Bremsmeßwerte überwacht werden, wobei dann bei einer Abweichung von der Modellvorstellung bzw. den in der Tabelle abgespeicherten Werten von den Meßgrößen auf einen Fehler des Bremsmoduls 7 geschlossen werden kann. Das Bremsmodul 7 geht dann in einen sicheren Zustand über. Die Bremse wird dann gelöst und geht somit auf bzw. schleift lediglich an der Bremsscheibe des Rads 9. Die Fail-Safe-Ausbildung des Bremsmoduls 7 kann somit durch eine Hardwareredundanz und eine analytische Redundanz (Softwareredundanz) erzielt werden.

Weiterhin enthalten die Bremsmodule 7 jeweils eine Einrichtung zur zeitsynchronen Erfassung von Raddrehzahlen. Die Raddrehzahlen werden in den Datenbus 5 gespeist und zu dem Bauteil oder Element geführt, das die höheren Funktionen ausführt. Die Bremsmodule 7 haben eine gemeinsame Zeitbasis.

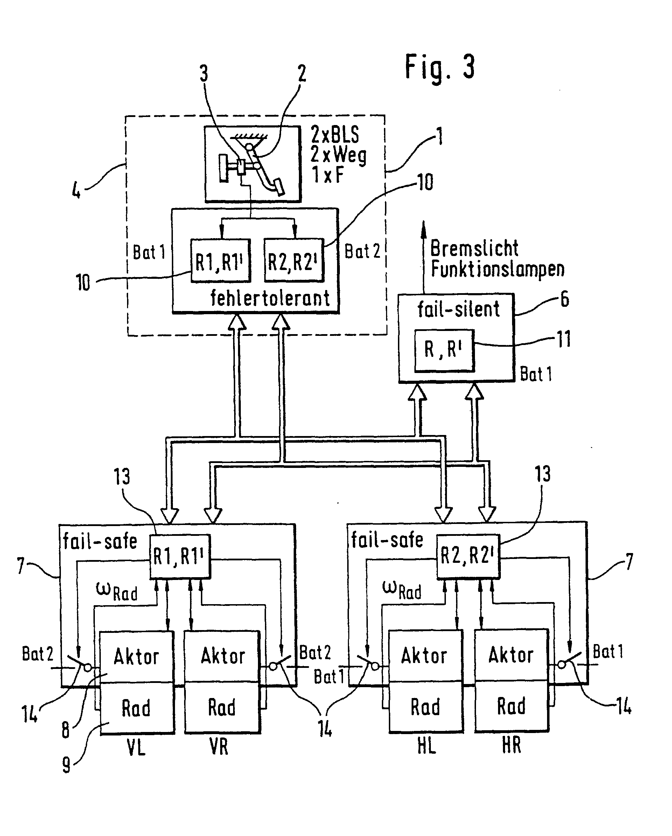

In der Fig. 3 ist eine weitere Ausführungsform der Erfindung dargestellt. Wie in den Figuren 1 und 2 wird in der Fig. 3 der Fahrerbremswunsch mit einer geeigneten Sensorik 3 erfaßt. Die Sensorik 3 kann hierbei aus redundanten Sensoren bestehen, die beispielsweise den Pedalweg und die Fußkraft erfassen. Diese analogen Signale werden wiederum lokal in digitale Werte gewandelt. Die Datenkonsolidierung, d.h. die Erkennung defekter Sensoren oder defekter Hardware und die Bremssollwertermittlung erfolgt nun in Pedalmodulrechnern 10. Das Pedalmodul 1 ist damit fehlertolerant ausgeführt. Das fehlertolerante System gibt ein konsolidiertes Signal aus, wobei davon ausgegangen wird, daß das konsolidierte Signal (d.h. z.B. der Bremssollwert) korrekt ist. Wenn ein Fehler eines Sensor der Sensorik 3 erkannt wird, so kann sich das fehlertolerante Pedalmodul 1 rekonfigurieren, wobei dann die gleiche Funktion wie vorher ohne einen Funktionsverlust ausgeführt werden kann.

Der konsolidierte Bremssollwert wird dann an das Zentralmodul 6 übertragen, durch höhere Funktionen (ABS, ASR, usw.) eventuell modifiziert und dann an die Bremsmodule 7 übertragen. Die Bremsmodule 7 verwenden den Bremssollwert dann zur Ausgabe einer Zuspannkraft, eines Bremsmoments oder von äquivalenten Größen, wobei dann die Aktoren 8 entsprechend betätigt werden. Fällt das Zentralmodul 6 aus, so wird auf eine Notlauffunktion geschaltet. Dasselbe gilt, wenn die Zentralmodulfunktion in einem Bremsmodul 7 realisiert ist.

In der Notlauffunktion wird in dieser Ausführungsform der Bremssollwert in jedem Bremsmodul 7 direkt in einen entsprechenden Sollwert der Zuspannkraft, des Bremsmoments, usw., umgerechnet.

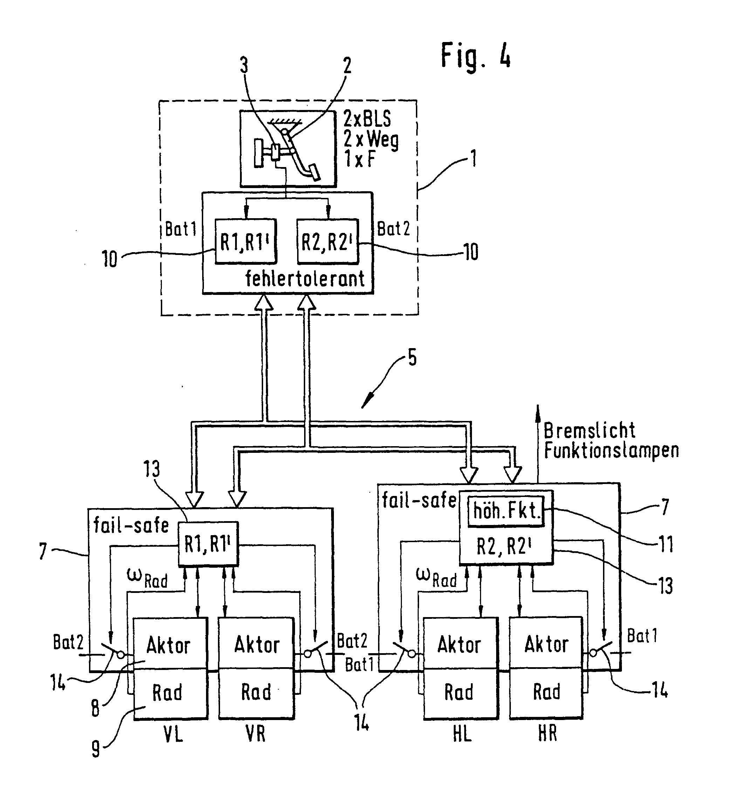

Falls die höheren Funktionen in einem Bremsmodul 7 implementiert sind (Fig. 4), so wird in diesem Bremsmodul 7 der Bremswunsch modifiziert und über den Datenbus 5 an das andere Bremsmodul 7 als modifizierter Bremssollwert übertragen. Dieser modifizierte Bremssollwert wird dann wiederum zum Ermitteln und zur Ausgabe einer entsprechenden Zuspannkraft, eines Bremsmoments oder einer äquivalenten Größe herangezogen. Fällt ein Bremsmodul 7 aus, so übernimmt das intakte Bremsmodul 7 die Bestimmung der Zuspannkraft des Bremsmoments oder der äquivalenten Größen.

Der Aufbau des Pedalmoduls 1 ist mehrfach redundant ausgeführt. Es können zumindest drei Rechner vorgesehen sein, so daß die Erzeugung des Bremssollwerts fehlertolerant ist.

Als Ausführungsbeispiel ist in den Figuren 3 und 4 eine Rechnerstruktur des Pedalmodulrechners 10 dargestellt, die zwei redundante Rechner in einer Duo-/Duplexstruktur aufweist. Bei dieser Variante besteht der Rechner des Pedalmoduls 1 aus vier Rechnern (R1, R1', R2, R2'), wobei jeweils zwei zu einer eigensicheren (fail-silent) Struktur zusammengefaßt sind. Pro Rechnerpaar wird ein konsolidierter Fahrerbremswunsch ermittelt und auf den Datenbus 5 gegeben. Tritt ein Rechenfehler auf, so schaltet sich der betroffene redundante Rechner ab, d.h. es wird entweder ein fehlerfreier oder gar kein Bremssollwert ausgegeben. Weiterhin wäre denkbar einen Dreifachrechner mit nachgeschaltetem Voter/Monitor einzusetzen. Bei dieser Struktur würde nur ein konsolidierter Bremssollwert ausgegeben werden.

Im folgenden wird bezüglich der Figuren 1 bis 4 die Funktion der einzelnen Module und Elemente des Bremssystems näher erläutert.

Das Zentralmodul 6 bzw. die Steuereinheit enthält die vorgenannten höheren Funktionen und führt im Fall des nicht selbstsicheren Pedalmoduls 1 die Ermittlung des Bremssoll-wertes durch. Weiterhin führt das Zentralmodul 6 im Fall des nicht fehlertoleranten bzw. nicht selbstsicheren Pedalmoduls 1 eine Fehlererkennung des Pedalmoduls 1 durch. Der Zentralmodulrechner 11 ist redundant und schaltet sich im Fehler-fall selbst ab. Das Zentralmodul 6 verhält sich dann entweder still (fail-silent) oder gibt noch eine Meldung über seinen Ausfall ab, um das Gesamtsystem in einen sicheren Zustand zu überführen (fail-safe). Ein fehlerhafter Wert wird nicht ausgegeben. Sind die Funktionen des Zentralmoduls 6 in einem Bremsmodul 7 implementiert (Figuren 2 und 4), so gilt das oben Gesagte äquivalent. Bei dieser Ausführungsform fällt jedoch die Schnittstelle Zentralmodul/Bremsmodul weg.

Das Bremsmodul 7 besteht aus einem redundanten Bremsmodulrechner 13 (R1, R1'), der Leistungselektronik für zwei Aktoren 8 und einer redundant ausgeführten oder zyklisch testbaren Abschalteinheit 14. Die aktorspezifischen Sensorsignale (z.B. Strom, Spannung, Position, Temperatur, usw.) werden dem Bremsmodul 7 bzw. dem Bremsmodulrechner 13 zugeführt.

Die Abschalteinheit 14 ist sicherheitstechnisch getrennt von der Leistungselektronik, d.h. ein Fehler der Leistungselektronik beeinflußt die Funktion der Abschaltung nicht. Durch die redundante Rechnerstruktur ist sichergestellt, daß bei einem Abschaltbefehl des Zentralmoduls 6 oder bei einem Fehler im Bremsmodul 7 der Abschaltbefehl lokal korrekt ausgeführt wird. Durch diese Struktur kann eine separate Abschaltleitung vom Zentralmodul 6 eingespart werden.

Die Redundanzschnittstelle ist in diesem Fall fail-safe, d.h. das Bremsmodul 7 erfüllt seine spezifische Funktion oder schaltet sich im Fehlerfall selbst ab und meldet die Fehlfunktion oder ist im Falle eines Rechnerfehlers still. Durch die Fail-Safe-Struktur ist sichergestellt, daß ein Fehler erkannt wird und der Aktor 8 abgeschaltet werden kann.

Somit wird eine analytische Redundanz (Softwareredundanz) für die Leistungselektronik, den Aktor 8 und die Sensoren des Aktors 8 erhalten. Damit wird eine Fehlererkennung ermöglicht, die auf der Basis der aktorspezifischen Sensoren (Stromsensor, Positionssensor, Spannkraftsensor, Temperatursensor, usw.) und dem spezifischen mathematischen Modell des Aktors 8 durchgeführt wird. Ist die (eventuell aufbereitete) Differenz zwischen dem Modellausgang und den gemessenen Signalen zu groß, so liegt ein Fehler vor und der Aktor 8 wird abgeschaltet.

Es ist auch denkbar, daß ein Bremsmodul 7 für jede Radbremse vorgesehen ist. Ein Kreisausfall bei Ausfall eines Bremsmoduls ist dadurch ausgeschlossen.

Für alle Module gilt, daß redundante Rechner mit der Eigenschaften fail-silent oder fail-safe beispielsweise durch zwei vollständige, parallele Rechner mit gleichem oder dissimilarem Aufbau aufgebaut werden können. Weiterhin wäre es möglich, eventuell einen Doppelrechner mit Kernredundanz zu verwenden. Ähnliche Strukturen wären auch für einen fehlertoleranten Dreifachrechner möglich. Beim Dreifachrechner würde jedoch anstelle eines Vergleichers (Zweirechnerkonzept) ein fehlertoleranter Voter/Monitor benötigt.

Der Datenbus 5 ist doppelt ausgeführt und mit jedem Modul verbunden. Aus Kostengründen kann ein reduzierter Doppelbus 5 eingesetzt werden. Der zweite Bus bis zum Zentralmodul 6 und einem Bremsmodul könnte eingespart werden. Die Sicherheit bezüglich der Bremsfunktion im Fehlerfall bleibt jedoch erhalten, da die Verbindung von dem Pedalmodul 1 zu einem Bremsmodul 7 (z. B. für die Vorderachse) doppelt ist. Es tritt aber gegenüber der vollständigen Doppelbus-Struktur ein Funktionsverlust z. B. (höhere Funktionen) bei einem Busfehler im Einfach-Bus auf. Dieser Funktionsverlust ist jedoch eventuell tolerierbar.

Der Datenbus 7 kann ein CAN (Controller Area Network)-Bus mit einer ereignisorientierten Datenübertragung sein. Weiterhin kann ein TTP (Time Triggered Protocol) verwendet werden, so daß ein zeitsynchrones Rechnernetz möglich wird.

Eine zentrale und synchrone Erfassung der Raddrehzahlen kann im Zentralmodul 6 erfolgen oder in einem Bremsmodul 7. Bei einer getrennten Erfassung und Aufbereitung der Raddrehzahlen und der Busübertragung muß in den Bremsmodulen 7 die Erfassung zeitsynchron erfolgen. Dies ist beispielsweise bei der Verwendung eines TTB-Busses einfach zu realisieren. Mit dem CAN-Bus ist ein größerer Aufwand erforderlich, um die nötige Synchronität zu erreichen.

Als Energieversorgung sind zumindest zwei unabhängige Versorgungsquellen notwendig (Bat 1, Bat 2).

Durch das erfindungsgemäße Vorsehen von zwei Aktoren 8 in einem Bremsmodul 7 ergibt sich im Fehlerfall eine der hydraulischen Bremse vergleichbare Degradation. Beim Ausfall eines Bremsmoduls 7 oder einer Energieversorgung fallen zwei Bremsen 8, 9 aus. Somit kann von einem Kreisausfall gesprochen werden. Sind die höheren Funktionen in dem betroffenen Bremsmodul 7 implementiert (vgl. Figuren 2 und 4), so fallen diese mit aus. Dies kann tolerierbar sein, da bei einem Kreisausfall auch keine höheren Funktionen mehr benötigt werden. Ansonsten ist bei einem Fehler in einem Aktor 8 und dem zugehörigen Leistungsteil und den Sensoren nur eine Radbremse betroffen. Beim Ausfall des Zentralmoduls 6 fallen beispielsweise auch die höheren Funktionen aus (vgl. Figuren 1 und 3), wobei die volle Randbremsfunktion erhalten bleibt. Ein Ausfall eines Busses hat keine Degradation zur Folge (außer bei dem Einsatz des vorgenannten reduzierten Doppelbusses).

Die erfindungsgemäße Systemarchitektur gewährleistet, daß keine Fehlerfortpflanzung auftritt. Erfindungsgemäß wird ein Fehler erkannt, bevor er sich auf andere Funktionen oder Module auswirken kann. Weiterhin sind die Verkopplungen reduziert und der Kommunikationsaufwand ist im Fehlerfall minimal. Für die Fehlerfortpflanzung und den Aufwand zur Fehlererkennung ist es dabei unerheblich, ob die Funktion Fahrerwunscherfassung (Bremssollwertermittlung) und Fehlererkennung der Pedalsensoren im Pedalmodul 1 oder im Zentralmodul 6 bearbeitet werden.

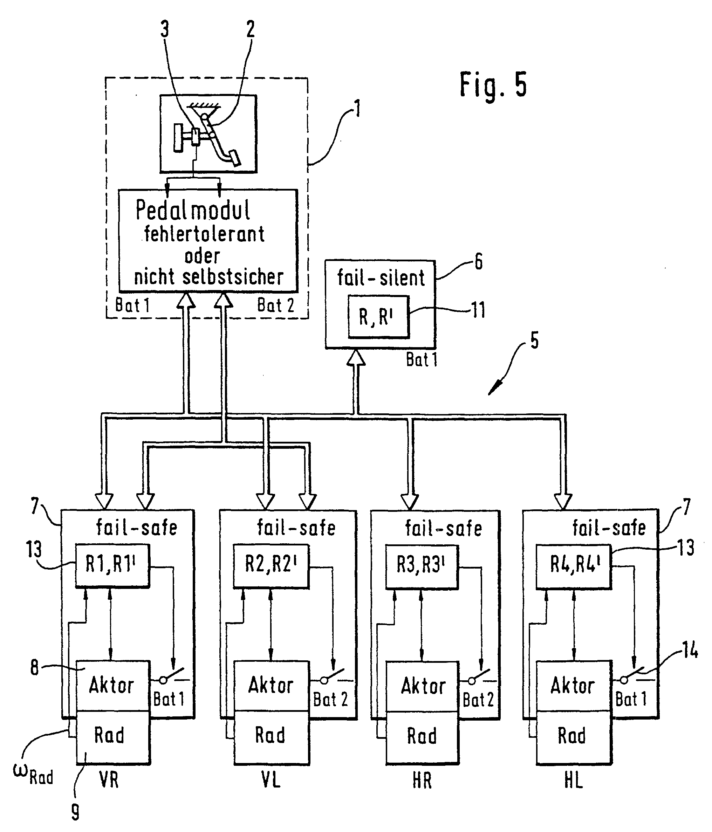

Die Fig. 5 zeigt eine weitere Ausführungsform der Erfindung. Im Unterschied zu den vorangegangenen Ausführungsformen ist jedes Bremsmodul 7 nun mit einem redundanten Rechner 13, einer Leistungselektronik, einem Aktor 8 und den aktorspezifischen Sensoren (z.B. Strom, Spannkraft, Position) und einer redundant ausgeführten oder zyklisch testbaren Abschalteinheit 14 für die Spannungsversorgung des Aktors 8 versehen. Insbesondere ist der redundante Rechner 13 nun jeweils für eine Radbremse vorgesehen. Somit ist bei einem Ausfall des Rechners 13 lediglich eine Radbremse betroffen, wobei dann die anderen Bremsmodule 7 nach wie vor fehlerlos funktionieren.

Der Datenbus kann aus Kostengründen reduziert ausgebildet sein. Der zweite Bus zu den Bremsmodulen 7 der Hinterachse (HR, HL) und zum Zentralmodul 6 kann eingespart werden. Die Sicherheit bezüglich der Bremsfunktion im Fehlerfall bleibt jedoch erhalten, da die Verbindung zwischen dem Pedalmodul 1 zu den vorzugsweise vorderen Bremsmodulen 7 (VR, VL) doppelt ist. Es tritt aber gegenüber der vollständigen Doppelbusstruktur (vgl. Fig. 1 bis 4) ein Funktionsverlust bei einem Busfehler im Einfach-Bus auf. Dieser Funktionsverlust ist jedoch tolerierbar.

Betreffend der Degradation im Fehlerfall ist der Funktionsverlust gering. Nur bei einem Ausfall einer Energieversorgung (Rad 1 oder Rad 2) fallen zwei Bremsen (Kreisausfall) aus, ansonsten ist immer nur eine Radbremse 7 betroffen. Beim Ausfall des Zentralmoduls 6 gehen lediglich die höheren Funktionen (ABS, ASR, ESP, ...) verloren, wobei die volle Grundbremsfunktion erhalten bleibt. Ein Ausfall eines Busses hat keine Degradation zur Folge. Bei einem reduzierten Doppelbus (wie in Fig. 5 dargestellt) können bei einem Busfehler jedoch das Zentralmodul 6 und die Bremsmodule 7 ausfallen, die den hinteren Bremsen (HR und HL) zugeordnet sind. Die Architektur ist so konfigurierbar, daß bei einem Fehler nie die Hinterradbremsen (HR und HL) allein zur Verfügung stehen. Die Systemarchitektur gewährt eine hohe Bremsverzögerung in allen Fehlerfällen.

## Patentansprüche

1. Elektromechanisches Bremssystem, insbesondere für Kraftfahrzeuge, mit
einem Pedalmodul (1) zum redundanten Erfassen einer Fahrerbetätigung eines Bremspedals (2) mittels einer geeigneten Sensorik (3),
einer Einrichtung zum Ermitteln eines Bremssollwerts basierend auf Ausgangssignalen der Sensorik (3), zumindest einem Bremsmodul (7) zum Ansteuern von zumindest einer Radbremse (8, 9) basierend auf dem Bremssollwert, und
einer Datenübertragungseinheit, die redundant ausgeführt ist und eine Datenverbindung zwischen dem Pedalmodul (1), der Einrichtung und dem Bremsmodul (7) herstellt, wobei
die Einrichtung eine Fehlererkennungsschaltung aufweist, die einen Fehler bei der Ermittlung des Bremssollwerts erkennt.

2. Elektromechanisches Bremssystem, insbesondere für Kraftfahrzeuge, mit
einem Pedalmodul (1) zum redundanten Erfassen einer Fahrerbetätigung eines Bremspedals (2) mittels einer geeigneten Sensorik (3), das
eine Einrichtung zum Ermitteln eines Bremssollwerts basierend auf Ausgangssignalen der Sensorik (3) enthält, zumindest einem Bremsmodul (7) zum Ansteuern von zumindest einer Radbremse (8, 9) basierend auf dem Bremssollwert, und
einer Datenübertragungseinheit, die redundant ausgeführt ist und eine Datenverbindung zwischen dem Pedalmodul (1) und dem Bremsmodul (7) herstellt, wobei
die Einrichtung eine Fehlererkennungsschaltung aufweist, die einen Fehler bei der Ermittlung des Bremssollwerts erkennt.

3. Elektromechanisches Bremssystem insbesondere für Kraftfahrzeuge, mit
einem Pedalmodul (1) zum redundanten Erfassen einer Fahrerbetätigung eines Bremspedals (2) mittels einer geeigneten Sensorik (3), das
eine Einrichtung zum Ermitteln eines Bremssollwerts basierend auf Ausgangssignalen der Sensorik (3) enthält, zumindest einem Bremsmodul (7) zum Ansteuern von zumindest einer Radbremse (8, 9) basierend auf dem Bremssollwert, und
einer Datenübertragungseinheit, die redundant ausgeführt ist und eine redundante Datenverbindung zwischen dem Pedalmodul (1) und einem ersten Bremsmodul (7) sowie eine nicht redundante Datenverbindung zwischen dem Pedalmodul (1) und einem zweiten Bremsmodul (-) herstellt, wobei
die Einrichtung eine Fehlererkennungsschaltung aufweist, die einen Fehler bei der Ermittlung des Bremssollwerts erkennt.

4. Bremssystem nach Anspruch 1, **dadurch gekennzeichnet, daß** die Einrichtung in einer Steuereinheit für höhere Funktionen des Bremssystems wie bspw. ABS, ASR, Fahrdynamikregelungen, ICC, Bremsassistent, Hillholder vorgesehen ist.

5. Bremssystem nach Anspruch 4, **dadurch gekennzeichnet, daß** die Steuereinheit als Zentralmodul (6) ausgebildet ist oder in dem Bremsmodul (7) integriert ist.

6. Bremssystem nach Anspruch 4 oder 5, **dadurch gekennzeichnet, daß** bei einem Ausfall der Steuereinheit der Bremssollwert im Notlaufbetrieb über die Ausgangssignale zumindest eines Sensors der Sensorik (3) in dem Radmodul (7) ermittelt wird.

7. Bremssystem nach Anspruch 5 oder 6, **dadurch gekennzeichnet, daß** das Zentralmodul (6) oder die in das Bremsmodul (7) integrierte Steuereinheit eine Datenkonsolidierung zur Erkennung von Störungen des Pedalmoduls (1) und/oder der Steuereinheit durchführt.

8. Bremssystem nach zumindest einem der vorangehenden Ansprüche 1 bis 7, **dadurch gekennzeichnet, daß** das Pedalmodul (1) zumindest zwei Module (4) aufweist, die beispielsweise Analogsignale und/oder inkrementelle Signale der Sensorik (3) in Digitalsignale umwandeln, die über zumindest zwei sicherheitstechnisch getrennte Buskopplungen in den Datenbus (5) gespeist werden oder in dem Pedalmodul (1) digital weiterverarbeitet werden.

9. Bremssystem nach Anspruch 2 oder 3, **dadurch gekennzeichnet, daß** das Pedalmodul (1) fehlertolerant ist und eine Datenkonsolidierung zur Erkennung von Störungen des Pedalmoduls (1) durchführt.

10. Bremssystem nach zumindest einem der vorangehenden Ansprüche 1 bis 9, **dadurch gekennzeichnet, daß** die Datenübertragungseinheit ein zumindest zwischen dem Pedalmodul (1) und dem Radmodul (7) doppelt ausgeführter Datenbus (5) ist.

11. Bremssystem nach zumindest einem der vorangehenden Ansprüche 1 bis 10, **dadurch gekennzeichnet, daß** das Pedalmodul (1) zumindest einen Pedalwegsensor und zumindest einen Pedalkraftsensor aufweist.

12. Bremssystem nach zumindest einem der vorangehenden Ansprüche 1 bis 11, **dadurch gekennzeichnet, daß** das Bremsmodul (7) fail-safe ausgebildet ist.

13. Bremssystem nach Anspruch 2 oder 3, **dadurch gekennzeichnet, daß** eine Steuereinheit für höhere Funktionen des Bremssystems wie bspw. ABS, ASR, Fahrdynamikregelungen, ICC, Bremsassistent, Hillholder vorgesehen ist.

14. Bremssystem nach Anspruch 13, **dadurch gekennzeichnet, daß** die Steuereinheit als Zentralmodul (6) ausgebildet ist oder in dem Bremsmodul (7) integriert ist.

15. Bremssystem nach zumindest einem der vorangehenden Ansprüche 5 bis 14, **dadurch gekennzeichnet, daß** das Zentralmodul (6) und/oder die Steuereinheit fail-silent ausgebildet sind.

16. Bremssystem nach zumindest einem der vorangehenden Ansprüche 1 bis 15, **dadurch gekennzeichnet, daß** das Bremsmodul (7) eine Fehlererkennung basierend auf lokalen aktorspezifischen Signalen wie beispielsweise Aktorstrom, Aktorposition, Spannkraft durchführt und bei einer Fehlererkennung eine entsprechende Meldung an das Bremssystem ausgibt, sich abschaltet und/oder eine Bremssollwertanpassung durchführt.

17. Bremssystem nach Anspruch 16, **dadurch gekennzeichnet, daß** die Fehlererkennung modellgestützt erfolgt.

18. Bremssystem nach zumindest einem der vorangehenden Ansprüche 1 bis 17, **dadurch gekennzeichnet, daß** das Bremsmodul (7) eine von einer Leistungselektronik unabhängige oder sicherheitstechnisch getrennte Abschalteinheit (14) aufweist.

19. Bremssystem nach zumindest einem der vorangehenden Ansprüche 1 bis 18, **dadurch gekennzeichnet, daß** in dem Bremsmodul (7) eine Einrichtung zur zeitsynchronen Erfassung einer Raddrehzahl vorgesehen ist und die Raddrehzahl in den Datenbus (5) gespeist wird.

20. Verfahren zur Steuerung eines elektromechanischen Bremssystems, insbesondere für Kraftfahrzeuge, mit den Schritten:
redundantes Erfassen einer Fahrerbetätigung eines Bremspedals (2) mittels einer geeigneten Sensorik (3) in einem Pedalmodul (1),
Ermitteln eines Bremssollwerts basierend auf Ausgangssignalen der Sensorik (3) in einer Einrichtung, Ansteuern von zumindest einer Radbremse (8, 9) basierend auf dem Bremssollwert in zumindest einem Bremsmodul (7), und Herstellen einer redundant ausgeführten Datenverbindung zwischen dem Pedalmodul (1), der Einrichtung und dem Bremsmodul (7), wobei
eine Fehlererkennungsschaltung einen Fehler bei der Ermittlung des Bremssollwerts erkennt.

21. Verfahren zur Steuerung eines elektromechanischen Bremssystems, insbesondere für Kraftfahrzeuge, mit den Schritten:
redundantes Erfassen einer Fahrerbetätigung eines Bremspedals (2) mittels einer geeigneten Sensorik (3) in einem Pedalmodul (1),
Ermitteln eines Bremssollwerts basierend auf Ausgangssignalen der Sensorik (3) in einer Einrichtung, die im Pedalmodul (1) enthalten ist,
Ansteuern von zumindest einer Radbremse (8, 9) basierend auf dem Bremssollwert in zumindest einem Bremsmodul (7), und Herstellen einer redundant ausgeführten Datenverbindung zwischen dem Pedalmodul (1) und dem Bremsmodul (7), wobei
eine Fehlererkennungsschaltungsschaltung einen Fehler bei der Ermittlung des Bremssollwerts erkennt.

22. Verfahren zur Steuerung eines elektromechanischen Bremssystems, insbesondere für Kraftfahrzeuge, mit den Schritten:
redundantes Erfassen einer Fahrerbetätigung eines Bremspedals (2) mittels einer geeigneten Sensorik (3) in einem Pedalmodul (1),
Ermitteln eines Bremssollwerts basierend auf Ausgangssignalen der Sensorik (3) in einer Einrichtung, die im Pedalmodul (1) enthalten ist,
Ansteuern von zumindest einer Radbremse (8, 9) basierend auf dem Bremssollwert in zumindest einem Bremsmodul (7), und Herstellen einer redundant ausgeführten Datenverbindung zwischen dem Pedalmodul (1) und einem ersten Bremsmodul (7) sowie einer nicht redundant ausgeführten Datenverbindung zwischen dem Pedalmodul (1) und einem zweiten Bremsmodul (-), wobei
eine Fehlererkennungsschaltung einen Fehler bei der Ermittlung des Bremssollwerts erkennt.

## Claims

1. An electromechanical brake system, in particular for automotive vehicles, which includes
a pedal module (1) for redundant detection of a driver's actuation of a brake pedal (2) by means of a suitable sensor system (3),
a device for determining a nominal braking value on the basis of output signals of the sensor system (3),
at least one brake module (7) for actuating at least one wheel brake (8, 9) on the basis of the nominal braking value, and
a data transfer unit, which is provided redundantly and establishes a data flow connection between the pedal module (1), the device, and the brake module (7),
wherein
said device is provided with an error detection circuit which detects any errors in the determination of the nominal braking value.

2. An electromechanical brake system, in particular for automotive vehicles, which includes
a pedal module (1) for redundant detection of a driver's actuation of a brake pedal (2) by means of a suitable sensor system (3) which comprises a device for determining a nominal braking value on the basis of output signals of the sensor system (3),
at least one brake module (7) for actuating at least one wheel brake (8, 9) on the basis of the nominal braking value, and
a data transfer unit, which is provided redundantly and establishes a data flow connection between the pedal module (1) and the brake module (7),
wherein
said device is provided with an error detection circuit which detects any errors in the determination of the nominal braking value.

3. An electromechanical brake system, in particular for automotive vehicles, which includes
a pedal module (1) for redundant detection of a driver's actuation of a brake pedal (2) by means of a suitable sensor system (3) which comprises a device for determining a nominal braking value on the basis of output signals of the sensor system (3),
at least one brake module (7) for actuating at least one wheel brake (8, 9) on the basis of the nominal braking value, and
a data transfer unit, which is provided redundantly and establishes a data flow connection between the pedal module (1) and the brake module (7) and a non-redundant data flow connection between the pedal module (1) and a second brake module (-),
wherein
said device is provided with an error detection circuit which detects any errors in the determination of the nominal braking value.

4. A brake system as claimed in claim 1,
**characterized in that** the device is provided in a control unit for superior functions of the brake system such as, e.g., ABS, TCS, driving dynamics control systems, ICC, brake-assist control, hillholder.

5. A brake system as claimed in claim 4,
**characterized in that** the control unit is designed as central module (6) or is integrated in the brake module (7).

6. A brake system as claimed in claim 4 or in claim 5,
**characterized in that**, upon a failure of the control unit, the nominal braking value is determined in an emergency function operation by way of the output signals of at least one sensor of the sensor system (3) in the wheel module (1).

7. A brake system as claimed in claim 5 or 6,
**characterized in that** the central module (6) or the control unit integrated in the brake module (7) performs a data consolidation for the purpose of detecting troubles of the pedal module (1) and/or of the control unit.

8. A brake system as claimed in at least one of the preceding claims 1 through 7,
**characterized in that** the pedal module (1) at least includes two modules (4) which, e.g., convert analog signals and/or incremental signals of the sensor system (3) into digital signals that are fed into the data bus (5) by way of two bus couplings, separated in terms of safety technology, or are digitally processed further in the pedal module (1).

9. A brake system as claimed in claim 2 or 3,
**characterized in that** the pedal module (1) is error-tolerant and performs a data consolidation for the purpose of detecting troubles of the pedal module (1).

10. A brake system as claimed in at least one of the preceding claims 1 through 9,
**characterized in that** the data transfer unit is a data bus (5) provided as a double bus at least between the pedal module (1) and the wheel module (7).

11. A brake system as claimed in at least one of the preceding claims 1 to 10,
**characterized in that** the pedal module (1) at least includes one pedal travel sensor and at least one pedal force sensor.

12. A brake system as claimed in at least one of the preceding claims 1 to 11,
**characterized in that** the brake module (7) features a failsafe design.

13. A brake system as claimed in claim 2 or 3,
**characterized in that** a control unit is provided for superior functions of the brake system such as, e.g., ABS, TCS, driving dynamics control systems, ICC, brake-assist control, hillholder.

14. A brake system as claimed in claim 13,
**characterized in that** the control unit is designed as a central module (6) or is integrated in the brake module (7).

15. A brake system as claimed in at least one of the preceding claims 5 to 14,
**characterized in that** the central module (6) and/or the control unit feature a fail-silent design.

16. A brake system as claimed in at least one of the preceding claims 1 to 15,
**characterized in that** the brake module (7) performs an error detection on the basis of local actuator-specific signals such as, e.g., actuator current, actuator position, clamping force, and **in that**, in case of a detected error, it emits a corresponding message to the brake system, turns off and/or performs an adaptation of the nominal braking value.

17. A brake system as claimed in claim 16,
**characterized in that** the error detection is performed, model-assisted.

18. A brake system as claimed in at least one of the preceding claims 1 to 17,
**characterized in that** the brake module (7) includes a disconnecting unit (14) which is independent of the power electronics system or is separated therefrom in terms of safety technology.

19. A brake system as claimed in at least one of the preceding claims 1 to 18,
**characterized in that** the brake module (7) includes a device for the synchronous detection of a rotational speed, and the rotational speed is fed into a data bus (5).

20. Method of controlling an electromechanical brake system, in particular for automotive vehicles, by the following steps:
redundant detection of a driver's actuation of a brake pedal (2) by means of a suitable sensor system (3) in a pedal module (1),
determining a nominal braking value on the basis of output signals of the sensor system (3) in a device,
actuating at least one wheel brake (8, 9) on the basis of the nominal braking value in at least one brake module (7), and
establishing a data flow connection which is provided redundantly between the pedal module (1), the device, and the brake module (7), wherein
an error detection circuit detects any errors in the determination of the nominal braking value.

21. A method of controlling an electromagnetic brake system, in particular for automotive vehicles, comprising the steps of:
redundant detection of a driver's actuation of a brake pedal (2) by means of a suitable sensor system (3) in a pedal module (1),
determining a nominal braking value on the basis of output signals of the sensor system (3) in a device which is comprised in the pedal module (1),
actuating at least one wheel brake (8, 9) on the basis of the nominal braking value in at least one brake module (7), and establishing a redundantly provided data flow connection between the pedal module (1) and the brake module (7), wherein
an error detection circuit detects any errors in determining the nominal braking value.

22. A method of controlling an electromagnetic brake system, in particular for automotive vehicles, comprising the steps of:
redundant detection of a driver's actuation of a brake pedal (2) by means of a suitable sensor system (3) in a pedal module (1),
determining a nominal braking value on the basis of output signals of the sensor system (3) in a device which is comprised in the pedal module (1),
actuating at least one wheel brake (8, 9) on the basis of the nominal braking value in a brake module (7), and
establishing a redundantly provided data flow connection between the pedal module (1) and a first brake module (7) and a non-redundant data flow connection between the pedal module (1) and a second brake module (-),
wherein
an error detection circuit detects any errors in determining the nominal braking value.

## Revendications

1. Système électromécanique de freinage, en particulier pour véhicules automobiles, comportant
un module de pédale (1) pour détecter de manière redondante, au moyen de capteurs (3) appropriés, l'actionnement d'une pédale de frein (2) par le conducteur,
un dispositif pour déterminer une valeur de consigne de freinage fondée sur des signaux de sortie des capteurs (3),
au moins un module de frein (7) pour commander au moins un frein de roue (8, 9) sur la base de la valeur de consigne de freinage, et
une unité de transmission des données, qui est réalisée de manière redondante et qui établit une liaison de données entre le module de pédale (1), le dispositif et le module de frein (7),
le dispositif comportant un circuit de reconnaissance de défaut qui détecte un défaut lors de la détermination de la valeur de consigne de freinage.

2. Système électromécanique de freinage, en particulier pour véhicules automobiles, comportant
un module de pédale (1) pour détecter de manière redondante, au moyen de capteurs (3) appropriés, l'actionnement d'une pédale de frein (2) par le conducteur, qui contient
un dispositif pour déterminer une valeur de consigne de freinage fondée sur des signaux de sortie des capteurs (3),
au moins un module de frein (7) pour commander au moins un frein de roue (8, 9) sur la base de la valeur de consigne de freinage, et
une unité de transmission des données, qui est réalisée de manière redondante et qui établit une liaison de données entre le module de pédale (1) et le module de frein (7),
le dispositif comportant un circuit de reconnaissance de défaut qui détecte un défaut lors de la détermination de la valeur de consigne de freinage.

3. Système électromécanique de freinage, en particulier pour véhicules automobiles, comportant
un module de pédale (1) pour détecter de manière redondante, au moyen de capteurs (3) appropriés, l'actionnement d'une pédale de frein (2) par le conducteur, qui contient
un dispositif pour déterminer une valeur de consigne de freinage fondée sur des signaux de sortie des capteurs (3),
au moins un module de frein (7) pour commander au moins un frein de roue (8, 9) sur la base de la valeur de consigne de freinage, et
une unité de transmission des données, qui est réalisée de manière redondante et qui établit une liaison de données entre le module de pédale (1) et un premier module de frein (7), ainsi qu'une liaison de données non redondante entre le module de pédale (1) et un deuxième module de frein (-),
le dispositif comportant un circuit de reconnaissance de défaut qui détecte un défaut lors de la détermination de la valeur de consigne de freinage.

4. Système de freinage selon la revendication 1, **caractérisé en ce que** le dispositif est prévu dans une unité de commande pour fonctions supérieures du système de freinage telles que par exemple ABS, ASR, régulations de la dynamique de marche, ICC, assistance au freinage, Hillholder.

5. Système de freinage selon la revendication 4, **caractérisé en ce que** l'unité de commande est conformée en module central (6) ou intégrée dans le module de frein (7).

6. Système de freinage selon la revendication 4 ou 5, **caractérisé en ce qu'**en cas de défaillance de l'unité de commande, la valeur de consigne de freinage est déterminée en mode de secours, à travers les signaux de sortie d'au moins l'un des capteurs (3) dans le module de roue (7).

7. Système de freinage selon la revendication 5 ou 6, **caractérisé en ce que** le module central (6) ou l'unité de commande intégrée au module de frein (7) exécute une consolidation des données pour détecter des dérangements du module de pédale (1) et/ou de l'unité de commande.

8. Système de freinage selon l'une au moins des revendications 1 à 7 précédentes, **caractérisé en ce que** le module de pédale (1) comporte au moins deux modules (4) qui convertissent par exemple des signaux analogiques et/ou des signaux incrémentiels des capteurs (3) en signaux numériques qui sont envoyés, par au moins deux couplages de bus séparés d'un point de vue de la technique de sécurité, dans le bus de données (5), ou sont retraités de manière numérique dans le module de pédale (1).

9. Système de freinage selon la revendication 2 ou 3, **caractérisé en ce que** le module de pédale (1) tolère un défaut et exécute une consolidation des données pour détecter des dérangements du module de pédale (1).

10. Système de freinage selon l'une au moins des revendications 1 à 9 précédentes, **caractérisé en ce que** l'unité de transmission des données est un bus de données (5) réalisé au moins en double entre le module de pédale (1) et le module de roue (7).

11. Système de freinage selon l'une au moins des revendications 1 à 10 précédentes, **caractérisé en ce que** le module de pédale (1) comporte au moins un capteur de la course de la pédale et au moins un capteur de la force de la pédale.

12. Système de freinage selon l'une au moins des revendications 1 à 11 précédentes, **caractérisé en ce que** le module de frein (7) est à sûreté intégrée.

13. Système de freinage selon la revendication 2 ou 3, **caractérisé en ce qu'**il est prévu une unité de commande pour des fonctions supérieures du système de freinage telles que par exemple ABS, ASR, régulation de la dynamique de marche, ICC, assistance au freinage, Hillholder.

14. Système de freinage selon la revendication 13, **caractérisé en ce que** l'unité de commande est réalisée en tant que module central (6) ou est intégrée dans le module de frein (7).

15. Système de freinage selon l'une au moins des revendications 5 à 14 précédentes, **caractérisé en ce que** le module central (6) et/ou l'unité de commande sont fail-silent.

16. Système de freinage selon l'une au moins des revendications 1 à 15 précédentes, **caractérisé en ce que** le module de frein (7) exécute une reconnaissance de défaut sur la base de signaux locaux spécifiques des actionneurs, tels que par exemple courant d'actionneur, position d'actionneur, force de serrage, et, en cas de détection d'un défaut, délivre une signalisation correspondante au système de freinage, se met à l'arrêt et/ou exécute une adaptation de la valeur de consigne de freinage.

17. Système de freinage selon la revendication 16, **caractérisé en ce que** la détection de défaut est assistée par un modèle.

18. Système de freinage selon l'une au moins des revendications 1 à 17 précédentes, **caractérisé en ce que** le module de frein (7) comporte une unité de coupure (14) indépendante d'une électronique d'alimentation ou séparée sur le plan de la technique de sécurité.

19. Système de freinage selon l'une au moins des revendications 1 à 18 précédentes, **caractérisé en ce que** dans le module de frein (7) est prévu un dispositif pour détecter de manière synchrone dans le temps une vitesse de rotation de la roue, et la vitesse de rotation de la roue est envoyée dans le bus de données (5).

20. Procédé de commande d'un système électromécanique de freinage, en particulier pour véhicules automobiles, comportant les étapes suivantes :
détection redondante de l'actionnement par le conducteur d'une pédale de frein (2), au moyen de capteurs (3) appropriés dans un module de pédale (1),
détermination d'une valeur de consigne de freinage sur la base de signaux de sortie des capteurs (3) dans un dispositif,
commande d'au moins un frein de roue (8, 9) sur la base de la valeur de consigne de freinage dans au moins un module de frein (7), et
réalisation d'une liaison de données redondante entre le module de pédale (1), le dispositif et le module de frein (7),
un circuit de reconnaissance de défaut détectant un défaut lors de la détermination de la valeur de consigne de freinage.

21. Procédé de commande d'un système électromécanique de freinage, en particulier pour véhicules automobiles, comportant les étapes suivantes :
détection redondante de l'actionnement d'une pédale de frein (2) par le conducteur, au moyen de capteurs (3) appropriés dans un module de pédale (1),
détermination d'une valeur de consigne de freinage sur la base de signaux de sortie des capteurs (3) dans un dispositif qui est contenu dans le module de pédale (1),
commande d'au moins un frein de roue (8, 9) sur la base de la valeur de consigne de freinage dans au moins un module de frein (7), et
réalisation d'une liaison de données redondante entre le module de pédale (1) et le module de frein (7),
un circuit de reconnaissance de défaut détectant un défaut lors de la détermination de la valeur de consigne de freinage.

22. Procédé de commande d'un système électromécanique de freinage, en particulier pour véhicules automobiles, comportant les étapes suivantes :
détection redondante de l'actionnement par le conducteur d'une pédale de frein (2), au moyen de capteurs (3) appropriés dans un module de pédale (1),
détermination d'une valeur de consigne de freinage sur la base de signaux de sortie des capteurs (3) dans un dispositif qui est contenu dans le module de pédale (1),
commande d'au moins un frein de roue (8, 9) sur la base de la valeur de consigne de freinage dans au moins un module de frein (7), et
réalisation d'une liaison de données redondante entre le module de pédale (1) et un premier module de frein (7) ainsi qu'une liaison de données non redondante entre le module de pédale (1) et un deuxième module de frein (-),
un circuit de reconnaissance de défaut détectant un défaut lors de la détermination de la valeur de consigne de freinage.
